# EUROPEAN PATENT SPECIFICATION

(11) **EP 2 812 499 B1**
(45) Date of publication and mention of the grant of the patent: **08.04.2020**
(21) Application number: 12855750.1
(22) Date of filing: 10.12.2012
(51) Int. Cl.: E02D 17/18, E02B 3/10, E02B 15/06, E02B 15/08, B65B 9/20, E02B 15/04

(54) **METHOD FOR PRODUCING A FLOOD DAM OR A FLOATING OIL BOOM WHICH ARE LIMITING EXTENSION OR FLOODING OF WATER OR OTHER LIQUIDS, LIKE OIL**
VERFAHREN ZUR HERSTELLUNG EINES HOCHWASSERSCHUTZDAMMS ODER EINER SCHWIMMENDEN ÖLSPERRE ZUR BEGRENZUNG DER AUSBREITUNG ODER ÜBERSCHWEMMUNG VON WASSER ODER ANDEREN FLÜSSIGKEITEN, WIE ETWA ÖL
PROCÉDÉ POUR RÉALISER UN BARRAGE D'ÉCRÊTEMENT DES CRUES OU UN BARRAGE FLOTTANT LIMITANT L'EXPANSION OU L'INONDATION PAR L'EAU OU D'AUTRES LIQUIDES, TELS QUE LE PÉTROLE

(30) Priority: 09.12.2011 FI 20110412; 25.07.2012 FI 20120239
(43) Date of publication of application: 17.12.2014
(73) Proprietor: ScanSun Oy, 01150 Söderkulla (FI)
(72) Inventor: SALOMAA, Pekka, 33100 Tampere (FI)
(74) Representative: Kolster Oy Ab
(86) International application number: PCT/FI2012/000046
(87) International publication number: WO 2013/083870

(56) References cited:
- WO-A1-01/92643
- WO-A1-01/92643
- CH-B1- 700 951
- DE-A1- 1 634 020
- DE-U1-202010 008 093
- DE-U1-202010 008 093
- FR-A1- 2 886 625
- NL-A- 9 100 803
- US-A- 5 040 918
- US-A- 5 040 918
- "SILT BOOM ADAPTED FOR OIL CONTAINMENT", PETROLEUM ENGINEER INTERNATIONAL, HART PUBLICATIONS, US, vol. 61, no. 11, 1 November 1989 (1989-11-01), page 12, XP000086757, ISSN: 0164-8322

## Description

The object of the invention is a method for forming a floating flood boom in which method mass needed for forming the mentioned boom is brought to the location of the boom with the help of a transport vehicle and the mentioned mass is formed into a boom form.

Bringing of sandbags to the building site of a dam and their arrangement sequentially and on top of each other in order to form a dam with a desired height is previously known as a formation way of a flood dam. Forming of the dam occurring with the help of an excavator is also known by lifting ground from the inner or outer side of the dam to become building material of the dam. Bringing of sand or ground to the location with lorries has also been one used method by dumping the materials from the load to be a continuous dam.

The previously described formation ways of the flood dams have their own disadvantages. The bringing of the sand bags requires that they already exist somewhere or that they will be filled in the storage area of the sand. The organizing of the sand bags directly from the lorry in order to become a dam is not possible, but workforce and separate unloading devices are needed with which unloading devices the bags can be unloaded down from the load.

The forming of the dam occurring at the location with the help of an excavator requires that there is usable ground within reach of the machine and that it can be taken and moved to become a dam. This kind of dam also becomes fairly wide in relation to the height so that it would prevent the water from leaking through.

The disadvantage of the dam formed with the ground which is brought to the location with lorries is the required, sufficient width of the dam so that it would become waterproof. This leads to the fact that a quite large amount of ground is required per a dam metre. Floating pipe-like structures which can be set into the water system are known as oil booms which structures require a large storage space in the ship.

DE U 10 2010008093 describes a method for forming a flood dam limiting the extension or flooding of water. The sand is brought to the location of the dam with a transport vehicle. With the help of a filling device the sand is directed from the transport device to the tube forming the dam. US 5040918 discloses a method according to the preamble of claim 1 of the present invention for filling a floating containment boom for restricting dispersion of petroleum. It comprises an elongate flexible sheet having weights along one edge and a loop filled with foam forming reactants.

In order to solve these problems a new method has been developed in order to form the oil boom with the help of the mass which is brought to the location. It is characteristic of the method according to the invention that the mass is moved close to the mounting surface of the boom from the loading space of a vehicle, such as a lorry or the ship with the help of a mass transport vehicle, such as a pipe, groove or a conveyor and when the mass is being unloaded from the mentioned vehicle, it is being directed inside a flexible, pipe-like protective casing in which case in the method the protective casing is located around the mentioned mass transport vehicle and to be unloaded from there in order to form an outer casing for the boom.

The advantage of a method not forming part of the invention for forming a dam is the fact the mass located inside the protective casing stays in the desired form as a relatively narrow dam in which case the need for the mass decreases essentially per a dam metre. If sand is used as the mass, the protective casing can easily be selected to be a waterproof, strong casing in which case the dam becomes waterproof through the protective casing. If a mixture of sand and cement is used as a mass, a thin, flexible and strong casing which lets some water through, can be selected to be a protective casing in which case the water which leaks into the sand and the cement hardens the mass. The dam can easily be made to be wide at its lower part and narrow at its upper part when the bottom of the dam is formed by using the protective pipe with a larger diameter and a protective pipe with a smaller diameter is set on top of it.

The advantage of the method according to the invention for forming the oil boom is that the boom structure takes very little storage space from the ship and yet the needed boom length can easily be formed from it.

In the following embodiments are described more closely by referring to the accompanying drawing in which
Figure 1 shows the formation of a levee not according to the invention as a side view.
Figure 2 shows levees as a section view.
Figure 3 shows forming of the oil boom with the method according to the invention.

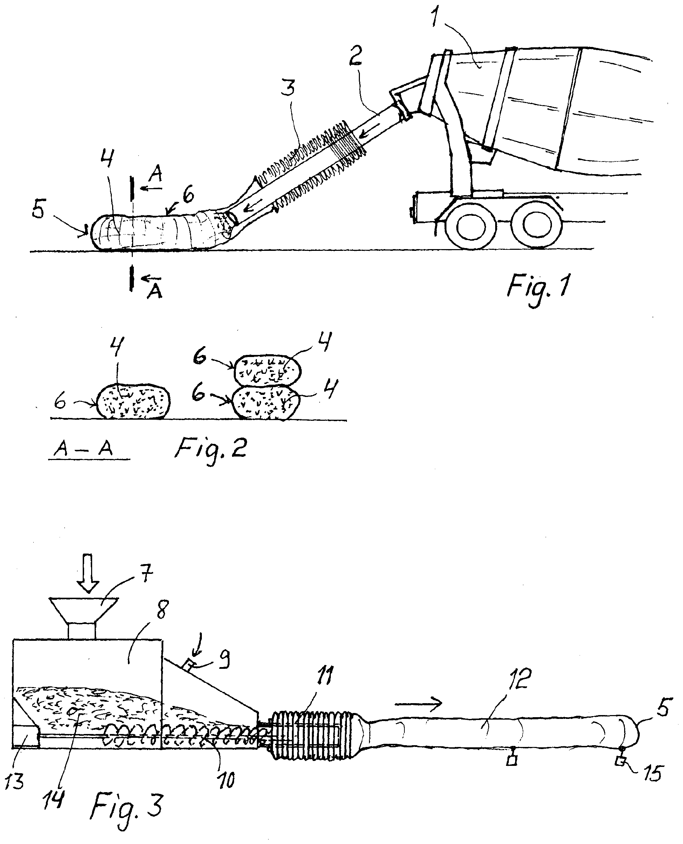

Forming of a flood dam is shown in the figure 1. Mass 4 which forms the dam 6 is brought in its container 1 with the help of a transport vehicle, such as a vehicle transporting concrete to be located onto the ground surface. From the container 1 the mass is directed with the help of a pipe 2 down towards the ground surface. Several dozens of metres of pipe-like protective casing 3 is located around the pipe 2 in the form of an accordion which protective casing unfolds on the top of the pipe 2 with the same speed when the mass 4 is coming out of the pipe 2. The starting head 5 of the protective pipe 3 is closed. The pipe 2 is turned aside from the direction of motion of the vehicle so that a dam 6 is formed slightly outside the driving line of the vehicle. In this case new dams 6 can be brought as additional layers on top of the dam 6 which became installed first.

A vehicle 1 transporting concrete of the figure 1 or another vehicle with a loading space can be used as the vehicle. The pipe 2 can be replaced with a groove or a conveyor which moves mass 4.

The protective casing 3 is most advantageously made of light and strong paper furnish, such as artificial fibre to which for example a plastic film has been joined so that it can be made waterproof, too. If waterproofness is not required, the fibre structure can be used as such, such as material which is similar to the material used in the large fibres.

It is advantageous to use sand as the mass 4 which is usually easily available. Waterproof protective material is then used as the protective casing 3. If a hardening mixture of sand and cement is used, a protective material, which lets some water through, is then chosen to be a protective casing 3 so that a normal hardening of concrete could occur.

Dam structures which are filled with mass 4 are shown in the figure 2. If several dams 6 are made on top of each other, pipe-like protective casings 3 with a smaller diameter are used in the upper layers.

A method according to the invention is shown in the figure 3 as a modified version in order to form an oil boom 12 which floats in the water. A container 8 is located in a ship which unloads the oil boom 12 into the water into which container polystyrene particles are directed through a funnel 7. The mentioned particles are made of solid material and they are expanded to be 50 times bigger regarding their volume in a way which corresponds to foaming with the help of water vapor which water vapor is directed to the container 8 through a pipe fitting 9. Polystyrene particles are moved with the help of a conveying screw 10 inside a pipe-like protective casing 11 which protective casing is folded to be short. The pipe-like protective casing 11 forms a waterproof casing for the oil boom 12.

The folded pipe-like protective cover 11 lengthens easily to be 50-100 times bigger when it has been set into water and has been opened to be direct and its filling is made of light, expanded polystyrene. This kind of structure may be too light to be an oil boom and may be located too much at the water surface. Therefore the equipment of the oil boom 12 with weights 15 is shown in the figure 3 as an implementation example in which case the oil boom floats in a deeper water and it also becomes stabilized. The addition of the weight of the oil boom may be included also in the casing structure of the boom itself by for example using metallic reinforcement parts in it.

## Claims

1. Method for forming a floating flood boom in which method mass (14), which is needed for forming the mentioned boom, is being brought to the location of the boom with the help of a transport vehicle and the mentioned mass is being formed to have a boom form, whereby the mass (14) is moved close to the mounting surface of a boom (12) from the loading space (1) of the vehicle with the help of a mass transport vehicle, such as a groove or a conveyor (10) and when the mass (14) is being unloaded from the mentioned vehicle, it is directed inside a flexible, pipe-like protective casing (11) in which case in the method the protective casing(11) is located around the mentioned mass transport vehicle and is located to be unloaded from there in order to form an outer casing for the boom (12), **characterized in that** polystyrene particles are moved with the help of a screw conveyor (10), and are used as mass (14) and the polystyrene particles are being handled with water vapor in order to expand them before or at the same time when they are being directed inside the pipe-like protective casing forming the oil boom (12).

2. Method according to the claim 1, **characterized in that** the starting head (5) of the pipe-like protective casing (11) is formed to be closed.

3. Method according to the claim 1 or 2, **characterized in that** the polystyrene particles are being handled with water vapor in order to expand them to be 50 times bigger regarding their volume.

4. Method according to the claim 1, **characterized in that** strong, artificial fibre material which is waterproof or lets water partly through is chosen to the material of the protective material (3).

5. Method according to the claim 1, **characterized in that** the oil boom (12) is equipped with weights (15) or the casing part of the boom (12) includes substance which is heavier than water in order to stabilize the oil boom (12) and/or to make it float in the water deep enough.

## Patentansprüche

1. Verfahren zum Bilden einer schwimmenden Flutsperre, wobei bei dem Verfahren eine Masse (14), die zum Bilden der erwähnten Sperre benötigt wird, mithilfe eines Transportfahrzeugs zum Standort der Sperre gebracht wird und die erwähnte Masse zu einer Sperrenform gebildet wird,
wobei die Masse (14) mithilfe eines Massentransportfahrzeugs, wie etwa einer Rinne oder eines Förderers (10), vom Laderaum (1) des Fahrzeugs in die Nähe der Montagefläche einer Sperre (12) bewegt wird, und, wenn die Masse (14) vom erwähnten Fahrzeug abgeladen wird, sie in ein flexibles rohrartiges Schutzgehäuse (11) geleitet wird, wobei in dem Fall bei dem Verfahren das Schutzgehäuse (11) um das erwähnte Massentransportfahrzeug herum angeordnet ist und angeordnet ist, um von dort abgeladen zu werden, um ein Außengehäuse für die Sperre (12) zu bilden, **dadurch gekennzeichnet, dass**
Polystyrolteilchen mithilfe eines Schneckenförderers (10) bewegt und als Masse (14) verwendet werden und die Polystyrolteilchen mit Wasserdampf behandelt werden, um sie vor oder zur selben Zeit, wenn sie in das rohrartige Schutzgehäuse, das die Ölsperre (12) bildet, geleitet werden, auszudehnen.

2. Verfahren nach Anspruch 1, **dadurch gekennzeichnet, dass** der Startkopf (5) des rohrartigen Schutzgehäuses (11) derart gebildet ist, dass er geschlossen ist.

3. Verfahren nach Anspruch 1 oder 2, **dadurch gekennzeichnet, dass** die Polystyrolteilchen mit Wasserdampf behandelt werden, um sie derart auszudehnen, dass sie mit Bezug auf ihr Volumen 50 Mal größer werden.

4. Verfahren nach Anspruch 1, **dadurch gekennzeichnet, dass** als das Material des Schutzmaterials (3) ein starkes Kunstfasermaterial ausgewählt wird, das wasserdicht ist oder Wasser teilweise durchlässt.

5. Verfahren nach Anspruch 1, **dadurch gekennzeichnet, dass** die Ölsperre (12) mit Gewichten (15) ausgestattet ist oder der Gehäuseteil der Sperre (12) eine Substanz beinhaltet, die schwerer als Wasser ist, um die Ölsperre (12) zu stabilisieren und/oder um zu bewirken, dass sie tief genug im Wasser schwimmt.

## Revendications

1. Procédé pour réaliser un barrage flottant anti-inondation, dans lequel procédé, la masse (14), qui est nécessaire pour réaliser le barrage mentionné, est amenée jusqu'à l'emplacement du barrage à l'aide d'un véhicule de transport et la masse mentionnée est formée pour avoir une forme de barrage, moyennant quoi la masse (14) est déplacée à proximité de la surface de montage d'un barrage (12) à partir de l'espace de chargement (1) du véhicule à l'aide d'un véhicule de transport de masse, tel qu'une gorge ou un transporteur (10) et lorsque la masse (14) est déchargée du véhicule mentionné, elle est dirigée à l'intérieur d'un carter de protection souple (11) de type tuyau, auquel cas dans le procédé, le carter de protection (11) est positionné autour du véhicule de transport de masse mentionné et est positionné pour être déchargé de là afin de former un carter externe pour le barrage (12), **caractérisé en ce que** :
des particules de polystyrène sont déplacées à l'aide d'un transporteur à vis (10) et sont utilisées en tant que masse (14) et les particules de polystyrène sont manipulées avec de la vapeur d'eau afin de les expanser avant ou en même temps lorsqu'elles sont dirigées à l'intérieur du carter de protection de type tuyau formant le barrage pour pétrole (12).

2. Procédé selon la revendication 1, **caractérisé en ce que** la tête (5) du carter de protection (11) de type tuyau est formée pour être fermée.

3. Procédé selon la revendication 1 ou 2, **caractérisé en ce que** les particules de polystyrènes sont manipulées avec de la vapeur d'eau afin de les expanser pour qu'elles soient 50 fois supérieures du point de vue de leur volume.

4. Procédé selon la revendication 1, **caractérisé en ce que** la matière fibreuse artificielle robuste qui est imperméable à l'eau ou partiellement perméable à l'eau est choisie pour être la matière de la matière de protection (3).

5. Procédé selon la revendication 1, **caractérisé en ce que** le barrage pour pétrole (12) est équipé de poids (15) ou la partie de carter du barrage (12) comprend une substance qui est plus lourde que l'eau afin de stabiliser le barrage pour pétrole (12) et/ou pour le faire flotter dans une eau assez profonde.
